Europäisches Patentamt

European Patent Office

Office européen des brevets

(11) Veröffentlichungsnummer : **0 011 291**
**B1**

(12) **EUROPÄISCHE PATENTSCHRIFT**

(45) Veröffentlichungstag der Patentschrift :
03.02.82

(21) Anmeldenummer : 79104501.6

(22) Anmeldetag : 14.11.79

(51) Int. Cl.³ : **B 65 H 3/06**, B 65 H 3/52,
G 06 K 13/16

(54) Abzugseinrichtung für Blattmaterial.

(30) Priorität : 18.11.78 DE 2850185

(43) Veröffentlichungstag der Anmeldung :
28.05.80 (Patentblatt 80/11)

(45) Bekanntmachung des Hinweises auf die Patenterteilung : 03.02.82 Patentblatt 82/05

(84) Benannte Vertragsstaaten :
AT CH FR NL SE

(56) Entgegenhaltungen :
DE - A - 2 308 794
DE - A1 - 2 539 902
DE - A1 - 2 622 302

(73) Patentinhaber : Nixdorf Computer Aktiengesellschaft
Fürstenallee 7
D-4790 Paderborn (DE)

(72) Erfinder : Weigel, Peter
Beerengrund 114
D-4791 Borchen-Dörenhagen (DE)

(74) Vertreter : Schaumburg, Karl-Heinz et al
Patentanwälte Schaumburg, Schulz-Dörlam & Thoenes Mauerkircherstrasse 31
D-8000 München 80 (DE)

EP 0 011 291 B1

Abzugseinrichtung für Blattmaterial

Die Erfindung bezieht sich auf eine Abzugseinrichtung für Blattmaterial, insbesondere Wertscheingeber, mit wenigstens einem Speicherbehälter für die stapelweise Aufnahme des Blattmaterials, mit dem Speicherbehälter zugeordneter Abzugsvorrichtung, bestehend aus motorisch angetriebenen, walzenartig angeordneten Transportrollen und aus vorzugsweise zwischen die kammartig mit Abstand voneinander angeordneten Transportrollen bzw. Rollenabschnitte eintauchbaren Gegenlaufrollen, sowie mit einer am Ende der Transportbahn angeordneten Ablage- bzw. Ausgabestation.

Bei einem bekannten Wertscheingeber, der auch in der DE-A-27 17 345 beschrieben ist, besteht die Abzugsvorrichtung aus mehreren motorisch angetriebenen Abzugsrollen, die in den nach der Abzugsseite hin teilweise offenen Speicherbehälter geringfügig eintauchen und die eine in bezug auf die Wertscheine gut haftende Oberfläche besitzen, sowie aus einer Kombination von motorisch angetriebenen Transportrollen und Gegendruckrollen. Die Transportrollen sowie die Gegendruckrollen sind auf zueinander parallelen Lagerwellen gelagert, wobei sie jeweils eine Vielzahl von zueinander beabstandeten Rollenabschnitten besitzen, die zusammen ein kammartiges Profil ergeben. In bezug auf die motorisch angetriebenen Transportrollen sind die ebenfalls motorisch, jedoch in der entgegengesetzten Richtung angetriebenen Gegendruckrollen so placiert, daß die Rollenabschnitte bzw. die einzelnen Gegendruckrollen in die Lücken zwischen den Rollenabschnitten der Transportrollen federnd einzutauchen vermögen, so daß die Möglichkeit besteht, die Eintauchtiefe und somit die Abzugskräfte an die verschiedenen Wertscheinqualitäten anzupassen bzw. allgemein eine optimale Rückhaltewirkung der Gegenlaufrollen zu erhalten. Eine sehr gute Transportwirkung in bezug auf die Transportrollen ergibt sich, wenn die Transportrollen aus einem elastisch nachgiebigen und in bezug auf die Wertscheine gut haftenden Material bestehen. Versuche haben jedoch ergeben, daß beim Vereinzeln der vom Speicherbehälter herangeführten, unerwünschten Mehrfach-Wertscheine, die aufeinanderhaften, Fehler entstehen können insofern, als zum Beispiel beim Aneinanderhaften von 6 bis 10 Wertscheinen dieser Wertschein-Stapel in das elastisch nachgiebige Material der Transportrollen eingedrückt wird und zum Teil ohne Vereinzelungswirkung die Abzugs- und Vereinzelungsvorrichtung passiert. Ein solcher Fehler tritt insbesondere beim Transport von neuen, steifen Wertscheinen, zum Beispiel Geldscheinen auf, welche Wertscheine durch den Schnittgrat am Rand fest zusammenhängen, und die als Stapel in die Transportbahn bzw. zu der Abzugs- und Vereinzelungsvorrichtung gelangen.

Aus der DE-A-23 08 794 ist eine Rollenanordnung zum Transport von Blattmaterial bekannt, bei der Gegenlaufrollen aus einem weniger elastischen Material mit Transportrollen aus einem mehr elastischen Material zusammenwirken. Bei dieser Rollenanordnung treten die vorstehend geschilderten Nachteile gleichfalls auf, denn die Blätter können in das elastische Material beider Rollengruppen eingedrückt werden.

Der vorliegenden Erfindung liegt die Aufgabe zugrunde, eine Abzugseinrichtung der eingangs genannten Art so auszugestalten, daß eine weitestgehend optimale Vereinzelungswirkung auch unter den ungünstigen Umständen in bezug auf die Beschaffenheit und die Stapelbildung des Blattmaterials erzielt wird.

Diese Aufgabe wird gemäß der Erfindung dadurch gelöst, daß die Gegenlaufrollen aus einem formstabilen Material und die Mehrzahl der Transportrollen oder Rollenabschnitte aus einem elastisch nachgiebigem, vorzugsweise eine zellige oder porige Oberfläche aufweisenden Material bestehen, während mindestens eine der Transportrollen oder Rollenabschnitte aus einem formstabilen weitestgehend unnachgiebigem Material gebildet ist. Auf diese Weise können die stapelweise aufeinanderliegenden Wertscheine nicht mehr vollständig in das Material der elastisch nachgiebigen Transportrollen ausweichen, denn dies wird durch das Vorhandensein wenigstens einer formstabilen Transportrolle verhindert. Hierbei wird die ausgezeichnete Haftfunktion der nachgiebigen Transportrollen nach wie vor wirksam und begünstigt die Abzugs- bzw. Transportbewegung des Blattmaterials, während die fälschlicherweise anhaftenden Blätter von der Gegenlaufrolle am Weitertransport gehindert werden. Versuche haben ergeben, daß auf diese Weise eine auch unter den ungünstigsten Verhältnissen fehlerfreie Vereinzelung der Blätter an dem definierten Spalt zwischen den Transportrollen und den Gegenlaufrollen erfolgt.

Besonders gute Vereinzelungseigenschaften werden dann erzielt, wenn, gemäß einer weiteren Ausgestaltung der Erfindung, zwei der formstabilen Transportrollen in Nähe der seitlichen Begrenzungen der auf einer motorangetriebenen Lagerwelle gelagerten und aus einer Vielzahl von Transportrollen bzw. Rollenabschnitten bestehenden Transportwalze angeordnet sind.

Weitere vorteilhafte Einzelheiten der Erfindung ergeben sich aus den in der Zeichnung dargestellten und nachstehend beschriebenen Ausführungsbeispielen. Es zeigt

Figur 1 die erfindungsgemäße Einrichtung in einem Wertscheingeber in schematischer Schnittdarstellung,

Figur 2 eine vergrößert dargestellte Einzelheit der Einrichtung in Draufsicht gemäß Blickrichtung A in Figur 1.

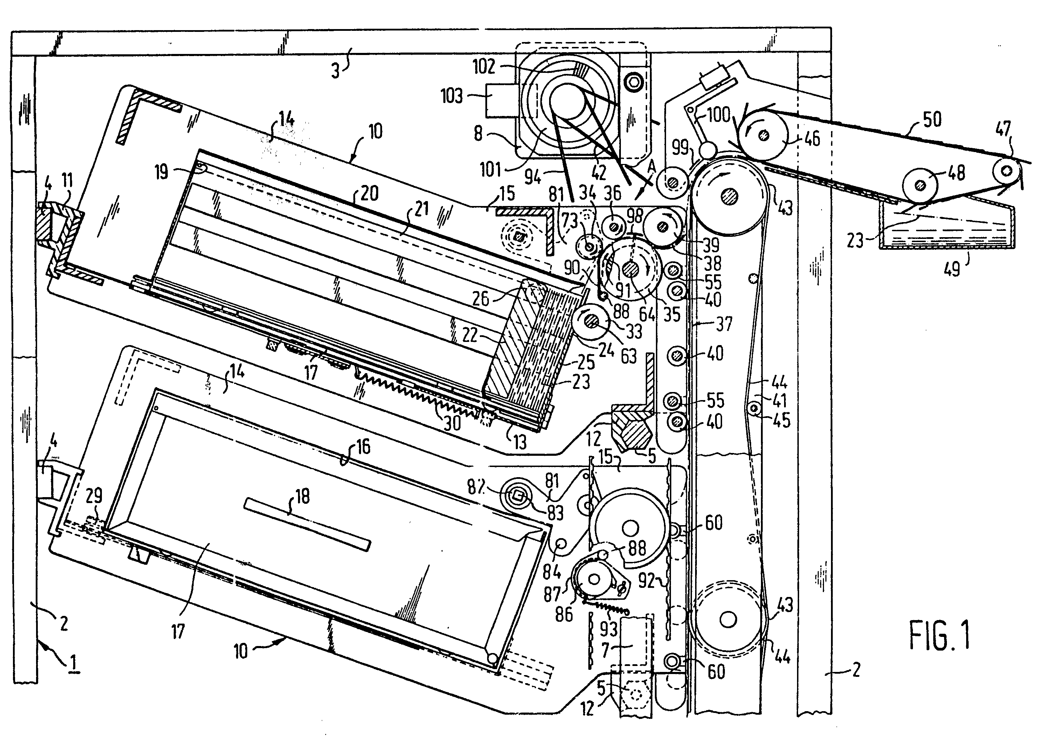

In der Schnittdarstellung gemäß Fig. 1 ist ein die nachstehend beschriebenen Teile und Baugruppen des Wertscheingebers tragendes Rahmengestell 1 gebildet aus im Ausführungsbeispiel vier senkrechten Gestellholmen 2 sowie aus die Gestellholme 2 miteinander verbindenden oberen und unteren, waagerechten Querholmen 3. Das Rahmengestell 1 besitzt ferner im Abstand übereinander an den Gestellholmen 2 befestigte hintere Lagertraversen 4 sowie als Sechskantprofil ausgebildete Lagertraversen 5, die höhenmäßig versetzt in bezug auf die Lagertraversen 4 an in Fig. 1 nur zum Teil dargestellten senkrechten Lagerholmen 7 des Rahmengestells 1 befestigt sind. Mit 8 ist ein an der oberen Begrenzung des Rahmengestells 1 befestigter Antriebsmotor bezeichnet. An den Lagertraversen 4 und 5 sind mit geringem gegenseitigen Abstand übereinander liegende, allgemein mit 10 bezeichnete Speicherbaugruppen mittels profilierten Lagerschienen 11 und 12 gelagert. Jede der Speicherbaugruppen 10 besteht aus einem Behälterrahmen 13 mit beidseitig daran befestigten Trägerplatten 14, die mit abgewinkelten Trägerabschnitten 15 über den Behälterrahmen 13 hinausragen. In Fig. 1 ist angedeutet, daß eine der seitlichen Trägerplatten 14 eine rechteckförmige Öffnung 16 besitzt, durch welche hindurch eine allgemein mit 17 bezeichnete, mit einem Handgriff 18 ausgestattete Speicherkassette in das Innere des Behälterrahmens 13 einschiebbar ist. Die Speicherkassette 17 selbst besitzt einen um den Drehpunkt 19 in Öffnungsstellung verschwenkbaren Deckel 20 sowie an den Kassettenseitenwänden befestigte Führungsschienen 21, an welchen ein klappenartiges Andrückgewicht 22 längs der Führungsschienen 21 frei verschiebbar gelagert ist. In jede Speicherkassette 17 können Stapel von Wertscheinen 23 zum Beispiel von Banknoten unterschiedlicher Sorte bzw. Wertigkeit eingelegt werden, wobei durch die geneigte Anordnung der Behälterrahmen 13 sowie der Speicherkassetten 17 der Wertscheinstapel 23 durch die Schwerkraft gegen die mit Aussparungen 24 versehene Kassettenwand 25 gedrückt wird. Unterstützt wird dies noch durch das Andrückgewicht 22, das an seinem oberen Ende mittels mittig angebrachten Laufrollen 26 in den Führungsschienen 21 frei schwenkbar gelagert ist.

An den Trägerplatten 15 der einzelnen Speicherbaugruppen 10 sind Abzugsvorrichtungen gelagert, bestehend aus Abzugsrollen 33, Gegenlaufrollen 34, Transportrollen 35 und Andrückrollen 36. An den Trägerplatten 15 sind Rahmen 37 befestigbar, welche den einzelnen Speicherbaugruppen 10 zugeordnet sind und an welchen unter anderem Leitbleche 38 und zugeordnete leerlaufende Andrückrollen 39 sowie Gegendrückrollen 40 gelagert sind. An der senkrechten Frontseite des Rahmengestells 1 ist ein Rahmen 41 befestigt, der mittels Antriebsriemen 42 vom Antriebsmotor 8 antreibbare Bandrollen 43 und elastische Transportrollen 35 trägt. Ferner besitzt das Rahmengestell 1 Träger für antreibbare Bandrollen 46, 47, 48, auf denen ein zu einer Ablage- bzw. Ausgabestation 49 führender Transportriemen 50 gelagert ist. Die Transportbänder 44 sowie Transportriemen 50 bestimmen Transportbahnen, die ineinander münden und die für den Sammeltransport sämtlicher aus den einzelnen Speicherbaugruppen 10 entnommenen Wertscheine 23 dienen. Die entlang den Abzugsvorrichtungen der verschiedenen Speicherbehälter bzw. Speicherbaugruppen sich erstreckende Transportbahn kann aus mehreren hintereinandergeschalteten Transportbändern bestehen.

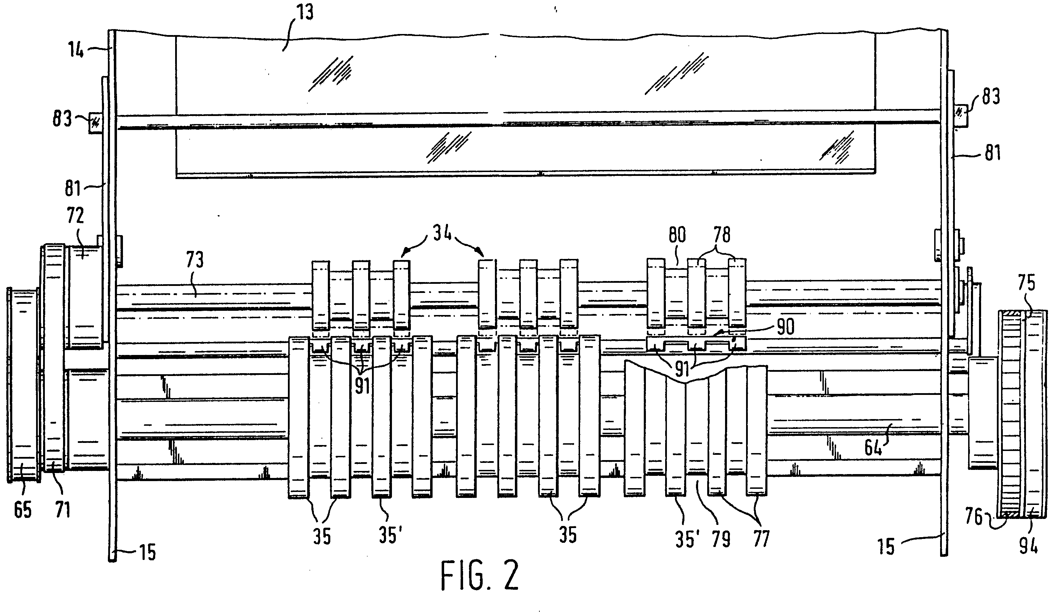

Fig. 2 zeigt die konstruktive Ausgestaltung der Abzugsvorrichtung einer Speicherbaugruppe 10. Die in Fig. 1 dargestellten, an den seitlichen Trägerplatten 14 im Bereich der Trägerabschnitte 15 gelagerten Abzugsrollen 33 sind der Übersichtlichkeit halber in Fig. 2 nicht dargestellt. Die Lagerwelle 64 der Transportrollen 35 ist über einen Riemenantrieb 65 über entsprechende Riemenscheiben mit der Antriebsseite einer an sich bekannten elektrisch aktivierbaren Magnetkupplung gekoppelt. Die Abtriebsseite der Magnetkupplung steht mit der in Fig. 1 dargestellten Lagerwelle 63 der an sich freilaufenden Abzugsrollen 33 in Verbindung. Die Lagerwelle 64 der Transportrollen 35 steht ebenfalls über einen Riemenantrieb 71 mittelbar über ein Untersetzungsgetriebe 72 mit der Lagerwelle 73 von Gegenlaufrollen 34 in Antriebsverbindung. Auf der anderen Trägerplattenseite trägt die Lagerwelle 64 der Transportrollen 35 Riemenscheiben 75 für den mit dem Antriebsmotor 8 in Verbindung stehenden Antriebsriemen 92 (Fig. 1) sowie für einen zur nächsten Speicherbaugruppe 10 weiterführenden Antriebsriemen 76. Fig. 2 zeigt deutlich, daß sowohl die Transportrollen 35 als auch die Gegenlaufrollen 34 ein kammartiges Profil besitzen mit im Abstand voneinander angeordneten Rollen bzw. Rollenabschnitten 77 bzw. 78 und mit dazwischenliegenden Einschnitten 79 bzw. 80, wobei die Rollenabschnitte 78 sich in Höhe der Einschnitte 79 befinden. Aus den Figuren ist zu entnehmen, daß die Gegenlaufrollen 34 bzw. deren Lagerwelle 73 auf beidseitig des Behälterrahmens 13 der Speicherbaugruppe 10 angeordneten Lagerschwingen 81 gelagert sind, welche ihrerseits über einen Exzenterantrieb 82 mit Vierkantansatz 83 an den Trägerplatten 15 befestigt sind, wobei durch Drehen der Vierkantansätze 83 die Lagerschwingen 81 um den Drehpunkt 84 verstellt werden können, so daß die Rollenabschnitte 78 der Gegenlaufrollen 34 mehr oder weniger tief in den Einschnitte 79 der Transportrollen 35 eintauchen können. Erfindungsgemäß bestehen die Gegenlaufrollen 34 aus einem formstabilen Material, vorzugsweise aus einem massiven Polyurethan-Kunststoff mit einer Shore-Härte von 92 bis 95. Mit Ausnahme von zwei in Nähe der seitlichen Begrenzungen der Transportwalze angeordneten Transportrollen bzw. Rollenabschnitten 35' bestehen sämtliche anderen Transportrollen bzw. Rollenabschnitte 35 aus einem elastisch nachgiebigen, vorzugsweise eine zellige oder porige Oberfläche aufweisenden Material, zum Beispiel aus zelligem Polyurethan-Kunststoff mit einer Materialdichte in der Größenordnung von 0,55 g/cm³.

Im folgenden ist die Funktionsweise des beschriebenen Wertscheingebers erläutert.

Der Antrieb der Abzugsvorrichtung der einzelnen Speicherbaugruppen 10, der Antrieb des bzw. der Transportbänder 44 sowie der Transportriemen 50 werden mittels Antriebsriemen 42, 94 vom zentralen Antriebsmotor 8 angetrieben. Der Wertscheingeber besitzt eine nicht näher dargestellte Steuereinrichtung, welche mit den Abzugsvorrichtungen bzw. mit den Magnetkupplungen der einzelnen Speicherbaugruppen 10 in Verbindung steht. Zum Beispiel mittels einer Tastatur kann ein bestimmtes Ausgabeprogramm, d.h. ein bestimmter aus dem Wertscheingeber zu entnehmender Wertschein- oder Geldbetrag in die Steuereinrichtung eingegeben werden. Über elektronische Einrichtungen werden hiernach von der Steuereinrichtung die Abzugsvorrichtungen der den einzelnen Banknoten-Wertigkeiten individuell zugeordneten Speicherbaugruppen 10 angesteuert, in dem die betreffenden Magnetkupplungen betätigt werden. Die Folge ist, daß die Lagerwellen 63 der betreffenden Abzugsrollen 33 mit dem Antrieb gekuppelt werden, so daß sich die Abzugsrollen 33 in Pfeilrichtung drehen. Hierdurch wird der jeweils vorderste Wertschein 23 aus der Speicherkassette 17 herausgezogen und einer durch die Transportrollen 35 bzw. 35', die Gegenlaufrollen 34, die Andrückrollen 36 sowie die Andrückrollen 38 bestimmten Abzugsbahn übergeben. Hierbei verhindern die entgegen der Transportrichtung sich relativ langsam drehenden Gegenlaufrollen 34, daß ein fälschlicherweise mitgeförderter Doppelbeleg zwischen die Transportrollen 35 und deren Andrückrollen 36 gerät, indem die Gegenlaufrollen 34 einen solchen Doppelbeleg zurückhalten. Durch die besondere Ausgestaltung der Transportrollen und Gegenlaufrollen wird zum einen eine sehr gute Haftwirkung zwischen den Wertscheinen und den elastisch nachgiebigen Transportrollen-Oberflächen sichergestellt, zum anderen wird jedoch verhindert, daß sich der fälschlicherweise aus mehreren Wertscheinen gebildete Wertschein-Stapel durch die Gegenlaufrollen in das elastisch nachgiebige Material der Transportrollen 35 eindrücken läßt, und zwar durch die formstabilen Transportrollen 35', die ein solches Ausweichen des Wertschein-Stapels verhindern. Auf diese Weise wird eine fehlerfreie Vereinzelung auch unter den ungünstigsten Umständen erzielt. In Höhe der Transportrollen 35 und 35' befindet sich eine Meldeeinrichtung 98 zum Beispiel in Form einer Lichtschranke. Sobald der Wertscheinanfang diese Meldeeinrichtung 98 erreicht, wird diese betätigt. Die Meldeeinrichtung 98 ihrerseits setzt die Magnetkupplung sowie die Abzugsrollen 33 still. Der korrekt transportierte Wertschein durchläuft die Meldeeinrichtung 98, das Leitblech 38 und wird in die zentrale Transportbahn, d.h. an das Transportband 44 übergeben. Von hieraus werden die ordnungsgemäß transportierten Wertscheine mittels des Transportriemens 50 zur Ablage- bzw. Ausgabestation 49 bzw. sofort dem Kunden zugeführt.

## Ansprüche

1. Abzugseinrichtung für Blattmaterial, insbesondere Wertscheingeber, mit wenigstens einem Speicherbehälter (17) für die stapelweise Aufnahme des Blattmaterials, mit dem Speicherbehälter zugeordneter Abzugsvorrichtung, bestehend aus motorisch angetriebenen, walzenartig angeordneten Transportrollen (35) und aus vorzugsweise zwischen die kammartig mit Abstand voneinander angeordneten Transportrollen (35) bzw. Rollenabschnitte (35) eintauchbaren Gegenlaufrollen (34), sowie mit einer am Ende der Transportbahn angeordneten Ablage- bzw. Ausgabestation (49), dadurch gekennzeichnet, daß die Gegenlaufrollen (34) aus einem formstabilen Material und die Mehrzahl der Transportrollen (35) oder Rollenabschnitte (35) aus einem elastisch nachgiebigen, vorzugsweise eine zellige oder porige Oberfläche aufweisenden Material bestehen, während mindestens eine (35') der Transportrollen (35) oder Rollenabschnitte (35) aus einem formstabilen, weitestgehend unnachgiebigen Material gebildet ist.

2. Abzugseinrichtung nach Anspruch 1, dadurch gekennzeichnet, daß zwei der formstabilen Transportrollen (35') in Nähe der seitlichen Begrenzungen der auf einer motorangetriebenen Lagerwelle (64) gelagerten und aus einer Vielzahl von Transportrollen (35) bzw. Rollenabschnitten (35) bestehenden Transportwalze angeordnet sind.

3. Abzugseinrichtung nach Anspruch 1 und/ oder 2, dadurch gekennzeichnet, daß die elastisch nachgiebigen Transportrollen (35) aus weichem Kunststoff, vorzugsweise aus zelligem Polyurethan mit einer Materialdichte in der Größenordnung von 0,55 g/cm³ bestehen.

4. Abzugseinrichtung nach einem oder mehreren der vorhergehenden Ansprüche, dadurch gekennzeichnet, daß die formstabilen Gegendruckrollen (34) und Transportrollen bzw. Rollenabschnitte (35') aus einem massiven Material, vorzugsweise aus Polyurethan mit einer Shore-Härte von 92 bis 95 bestehen.

## Claims

1. Delivery device for sheet material, in particular a security or currency-note dispenser, with at least one storage container (17) for accommodating in stacked fashion the sheet material, with a delivery apparatus associated with the storage container comprising motor-driven feed rollers (35) disposed like cylinders, and counter-rotating rollers (34) which preferably can penetrate between the feed rollers (35) or roller portions (35) which are arranged ridge-like and are spaced apart from one another, and also with a delivery or dispensing station (49) arranged at the end of the feed path, characterised in that the counter-rotating rollers (34) consist of a shape-retaining material and the majority of the feed rollers (35) or roller portions (35) consist of a resiliently flexible material which preferably has a cellular or porous surface, whereas at least one (35') of the feed rollers (35) or roller portions (35) is formed from a shape-retaining, extremely non-flexible material.

2. Delivery device according to Claim 1, characterised in that two of the shape-retaining feed rollers (35') are disposed in the vicinity of the lateral boundaries of the feed cylinder which is mounted on a motor-driven support shaft (64) and which comprises a plurality of feed rollers (35) or roller portions (35).

3. Delivery device according to Claims 1 and/or 2, characterised in that the resiliently flexible feed rollers (35) consist of soft plastics material, preferably of cellular polyurethane with a material density of the order of magnitude of 0.55 g/cm³.

4. Delivery device according to one or more of the preceding claims, characterised in that the shape-retaining counter-pressure rollers (34) and feed rollers or roller portions (35') consist of a solid material, preferably of polyurethane with a Shore hardness of from 92 to 95.

**Revendications**

1. Dispositif de retrait d'un matériau en feuilles, en particulier distributeur de billets, comprenant au moins un récipient de stockage (17) destiné à l'empilage du matériau en feuilles, un dispositif de retrait associé au réceptacle de stockage et constitué par des rouleaux transporteurs (35) entraînés par un moteur et disposés de manière à constituer un cylindre, des contre-rouleaux (34) pouvant être enfoncés de préférence entre les rouleaux transporteurs (35) ou les parties de rouleaux (35) disposés à la manière d'un peigne à une certaine distance les uns des autres, ainsi qu'un poste de dépôt ou de distribution (49) disposé à l'extrémité de la piste transporteuse, caractérisé en ce que les contre-rouleaux (34) sont constitués en un matériau de forme stable et la pluralité de rouleaux transporteurs (35) ou de parties de rouleaux (35) est constituée en un matériau élastique et souple, et de préférence en un matériau ayant une surface supérieure cellulaire ou poreuse, au moins l'un (35') des rouleaux transporteurs (35) ou des parties de rouleaux (35) étant constitué en un matériau de forme stable particulièrement non élastique.

2. Dispositif de retrait selon la revendication 1, caractérisé en ce que deux des rouleaux transporteurs (35') de forme stable sont montés à proximité des limites latérales du cylindre transporteur monté sur un arbre de support (64) entraîné par un moteur et constitué par une pluralité de rouleaux transporteurs (35) ou de parties de rouleaux (35).

3. Dispositif de retrait selon la revendication 1 ou 2, caractérisé en ce que les rouleaux transporteurs élastiques et souples (35) sont en une matière synthétique molle et, de préférence, en polyuréthane cellulaire dont la densité est de l'ordre de 0,55 g/cm³.

4. Dispositif de retrait selon l'une des revendications précédentes, caractérisé en ce que les contre-rouleaux de pression (34) et les rouleaux transporteurs ou parties de rouleaux (35') de forme stable sont constitués en un matériau compact, de préférence en polyuréthane ayant une dureté Shore comprise entre 92 et 95.

FIG.1

FIG. 2